# EUROPÄISCHE PATENTSCHRIFT

(11) **EP 2 548 686 B1**
(45) Veröffentlichungstag und Bekanntmachung des Hinweises auf die Patenterteilung: **18.12.2013**
(21) Anmeldenummer: 12175452.7
(22) Anmeldetag: 06.07.2012
(51) Int. Cl.: B23K 1/00, B23K 35/02, B23K 35/30, B23P 6/00, F01D 5/00

(54) **Lötfolie zum Hochtemperaturlöten und Verfahren zum Reparieren bzw. Herstellen von Bauteilen unter Verwendung dieser Lötfolie**
Solder film for high temperature soldering and method of repairing or producing components using this solder film
Feuille de brasage à haute température et procédé de réparation ou de fabrication de composants en utilisant cette feuille de brasage

(30) Priorität: 19.07.2011 CH 12042011
(43) Veröffentlichungstag der Anmeldung: 23.01.2013
(73) Patentinhaber: Alstom Technology Ltd, 5400 Baden (CH)
(72) Erfinder: Stankowski, Alexander, 5303 Würenlingen (CH); Beckel, Daniel, 5430 Wettingen (CH)

(56) Entgegenhaltungen:
- EP-A1- 0 342 506
- EP-A1- 0 677 355
- EP-A1- 1 967 313
- WO-A1-2010/051803
- JP-A- 6 200 344
- US-A1- 2006 071 056

## Beschreibung

Die Erfindung bezieht sich auf das Gebiet der Werkstofftechnik. Sie betrifft eine amorphe mittels Schmelzspinn-Verfahren hergestellte Lötfolie zum Hochtemperaturlöten gemäß dem Oberbegriff des Anspruchs 1 (siehe, z.B, entweden EP 0 677 335 A1 oder EP 0 342 506 A1), und ein Verfahren zum Verbinden mindestens zweier Bauteilelemente aus einkristallinen oder gerichtet erstarrten Superlegierungen zwecks Herstellung bzw. Reparatur von Bauteilen, insbesondere Gasturbinenschaufeln, unter Verwendung der erfindungsgemässen Lötfolie (siehe Ansprüche 12-13).

### Stand der Technik

Einkristalline oder gerichtet erstarrte Komponenten aus Superlegierungen, beispielsweise Nickel-Basis, Kobalt-Basis- oder Nickel-Kobalt-Basis-Superlegierungen, weisen bei sehr hohen Beanspruchungstemperaturen u.a. eine gute Materialfestigkeit, aber auch eine gute Korrosionsbeständigkeit und eine gute Oxidationsbeständigkeit sowie eine gute Zeitstandfestigkeit auf. Aufgrund dieser Eigenschaftskombination kann beim Einsatz derartiger, allerdings sehr teurer Werkstoffe, z. B. in Gasturbinen, die Einlasstemperatur der Turbine stark erhöht werden, wodurch der Wirkungsgrad der Anlage steigt. Betriebstemperaturen im Heissgasbereich von über 1400 °C sind daher Beanspruchungstemperaturen, denen eine Vielzahl von Bauteilen der Gasturbine, z. B. Leit- und Laufschaufeln oder Brennkammerauskleidungen ausgesetzt sind. Neben diesen hohen thermischen Beanspruchungen werden beispielsweise vor allem Turbinenlaufschaufeln auch mechanisch stark beansprucht. Dies alles kann während des Betriebes der Turbine zur Entstehung unerwünschter Risse im Material führen, so dass derartig geschädigte Bauteile entweder durch Neuteile ersetzt oder aber repariert werden müssen.

Da die Herstellung einkristalliner bzw. gerichtet erstarrter neuer Turbinenbauteile aber wie bereits oben erwähnt extrem kostspielig und bei grossen Teilen bezüglich einer ausreichenden Materialqualität (durchgängige einkristalline bzw. gerichtet erstarrte Struktur) kompliziert ist, versucht man meist, das vorhandene geschädigte Bauteil zu reparieren, d.h. die Funktionsfähigkeit des Bauteils soll durch die Reparatur wieder hergestellt und das reparierte Bauteil dann erneut für eine weitere Revisionsperiode in der Turbine eingesetzt werden.

Die Reparatur von einkristallinen oder gerichtet erstarrten geschädigten Gasturbinenbauteilen ist aber im Vergleich zur Reparatur von geschädigten Bauteilen, die ein herkömmliches polykristallines Gefüge aufweisen, wesentlich schwieriger, da auch die reparierten Bereiche der einkristallinen bzw. gerichtet erstarrten Bauteile eine entsprechende einkristalline beziehungsweise gerichtet erstarrte Mikrostruktur aufweisen sollten, anderenfalls kommt es zu einer unerwünschten Verschlechterung der Eigenschaften im reparierten Bereich.

Es ist bekannter Stand der Technik (siehe z. B. EP 1 258 545 B1), dass zur Reparatur geschädigter Gasturbinenbauteile beispielsweise ein Lötprozess eingesetzt wird. Dabei wird ein Lot im Bereich der Materialschädigung des Bauteils, z. B. im Bereich eines Risses, auf das Grundmaterial aufgebracht und in den Riss eingefüllt, sowie anschliessend mittels einer Wärmeeinwirkung (Behandlungstemperatur muss grösser sein als die Schmelztemperatur des Lotes, aber kleiner als die Schmelztemperatur des Grundwerkstoffes) aufgeschmolzen und mit dem Grundmaterial stoffschlüssig verbunden. Zur Absenkung der Schmelztemperatur des Lotes werden diesem meist schmelzpunkterniedrigende Elemente, im Falle der EP 1 258 545 B1 sind dies 1-3 Gew. -% B, zugegeben.

Das Lötverfahren hat gegenüber den ebenfalls bekannten, hier aber nicht näher beschriebenen Schweissverfahren zur Reparatur geschädigter Gasturbinenbauteile den Vorteil, dass beim Löten das Grundmaterial nicht aufgeschmolzen wird und daher die einkristalline Struktur des Grundmaterials erhalten bleiben kann.

Während der Wärmebehandlung beim Löten finden Diffusionsprozesse im Material statt, die u.a. dazu führen, dass die Schmelzpunkterniedriger, wie Bor, aus dem Lot in das umgebende Grundmaterial diffundieren. Das Lot erstarrt infolge der Absenkung der Bor-Konzentration, während das Grundmaterial im das Lot umgebenden Bereich eine erhöhte Bor-Konzentration aufweist, was nachteilig zur Ausscheidung spröder Boride führen kann.

Weiterhin kann auch nachteilig das Lotmaterial im Gegensatz zum Grundmaterial in vielen Fällen nach dem Löten aufgrund der grossen Wärmeeinwirkung keine einkristalline bzw. gerichtet erstarrte Struktur aufweisen. Dies ist u.a. darauf zurückzuführen, dass die für Gasturbinenkomponenten verwendeten hochtemperaturbeständigen Superlegierungen auch bei sehr hohen Temperaturen gelötet werden müssen. In Abhängigkeit von der Höhe der Eigenspannungen innerhalb des zu reparierenden Gebietes, beispielsweise eines Risses, ist dann die Rekristallisationswahrscheinlichkeit entlang der Rissoberfläche sehr hoch. Dies trifft besonders auf die Oberflächen zu, die während des Vorbereitungsprozesses vor dem Lötzyklus einer mechanischen Bearbeitung, wie beispielsweise einem Abschleifen, Sandstrahlen oder Kugelstrahlen, ausgesetzt sind.

Durch Rekristallisation kommt es zur Neubildung von Körnern im Grundmaterial, d.h. einerseits kann eine einkristalline bzw. gerichtet erstarrte

Struktur im Grundmaterial nicht mehr gewährleistet werden und andererseits sind die neu gebildeten Korngrenzen nicht stabil. Ebenso erstarrt das Lotmaterial in ungeordneter polykristalliner Struktur und weist somit nachteilig schlechtere Eigenschaften auf als das einkristalline bzw. gerichtet erstarrte Grundmaterial.

Eine polykristalline Struktur im Lotmaterial und Rekristallisation im Grundmaterial können nur verhindert werden, wenn es gelingt, die Löttemperatur tief genug unterhalb eines kritischen Wertes zu halten.

Aus EP 1 759 806 A1 und aus US 2004/0050913 A1 ist bekannt, durch Verringerung der Partikelgrösse (auf Werte im Nanometerbereich) einer Lotlegierung, die in einer Trägerflüssigkeit suspendiert ist, den Schmelzpunkt des Lotes zu senken, allerdings wird das mit dem Ziel gemacht, den Anteil an schmelzpunkterniedrigenden Elementen, z. B. B und Si, in der Lotlegierung zu senken bzw. diese Elemente gänzlich aus der Lotlegierung zu entfernen, da sie nachteilig für die Bildung von spröden Phasen verantwortlich sind, die u.a. einen ungewollten Duktilitätsverlust des Materials verursachen.

Der Effekt, der mit der Verwendung von Lotpulver im Nanometergrössenbereich erreicht wird, wird hier also ausgenutzt, um die Schmelzpunkterniedriger im Material zu ersetzen. Die Absenkung des Schmelzpunktes der Teilchen im Nanometergrössenbereich wird mit der niedrigen Aktivierungsenergie zum Freisetzen von Atomen auf der Oberfläche eines Teilchens in Nanogrösse im Vergleich mit einem grösseren Teilchen erklärt. Ausserdem schmelzen Nanoteilchen schneller als Pulverteilchen im Mikrometerbereich, da sie ein sehr grosses Oberflächen/Volumen-Verhältnis aufweisen. Nachteilig an dieser technischen Lösung ist, dass aufgrund der alleinigen Verwendung von Nanopartikeln als fester Lotbestandteil der Suspension ein starker Schrumpfungsschwund nach dem Löten auftritt und somit die Qualität der Lötstelle verbesserungsbedürftig ist.

Als weitere Möglichkeit zur zusätzlichen Senkung der Schmelztemperatur der Nanoteilchen bei der Reparatur von einkristallinen Bauteilen aus Superlegierungen mittels Löten wird in EP 1 759 806 A1 auch die Möglichkeit angegeben, Schmelzpunkterniedriger, insbesondere Bor, direkt zur Lötsuspension zuzugeben.

Aus US 2004/0050913 A1 ist ausserdem ein Lotmaterial zum Diffusionslöten bekannt, welches aus einer Pulvermischung aus Füllmaterialpartikeln im Nanometergrössenbereich (vorzugsweise zwischen 10 und 100 nm) und aus Pulverteilchen im Mikrometergrössenbereich (vorzugsweise zwischen 45 und 100 µm) in einer Trägersuspension besteht. Wie bereits oben erläutert, schmelzen die Nanopartikel bei einer Temperatur, die deutlich unter der Schmelztemperatur von Partikeln mit einer Korngrösse im Mikrometer-Bereich liegt, so dass in der genannten Druckschrift ausdrücklich wieder darauf hingewiesen wird, dass nun vorteilhaft die Zugabe von schmelzpunkterniedrigenden Elementen, wie B oder Si, zur Lotlegierung deutlich verringert bzw. völlig auf eine Zugabe von schmelzpunkterniedrigenden Elementen verzichtet werden kann und damit die negativen Wirkungen der schmelzpunkterniedrigenden Elemente auf die resultierenden Eigenschaften der Lotverbindung minimiert bzw. gänzlich beseitigt werden. Durch Reduzierung des Anteils an schmelzpunkterniedrigenden Elementen wird zudem auch der Anteil an zusätzlichen korngrenzenstabilisierenden Elementen, wie B, C, Hf, Re und Zr, in der Lotlegierung gesenkt.

In US 2004/0050913 A1 wird auch beschrieben, dass die Nanopartikel des Lotes auf ihrer Oberfläche optional mit einer ganz dünnen Schicht schmelzpunkterniedrigender Elemente, wie B oder Si, beschichtet sein können, wobei insgesamt der Anteil an schmelzpunkterniedrigenden Elementen im Lot aber immer noch wesentlich niedriger ist im Vergleich zum Anteil gemäss bekanntem Stand der Technik, was als Vorteil im genannten Dokument herausgestellt wird.

Weiterhin ist aus EP 1 930 116 A2 ein Verfahren zum Reparieren eines metallischen Bauteiles, welches einen Riss aufweist, bekannt. Bei diesem Verfahren wird zunächst eine Nanoteilchenlegierung in Form eines Pulvers, einer Folie, einer Suspension oder einer Paste in den Riss gefüllt, darüber eine Fülllegierung, die dem Grundwerkstoff zumindest ähnlich ist und eine Partikelgrösse im Mikrometerbereich aufweist, aufgebracht und anschliessend einem üblichen Diffusionslötprozess unterzogen. Die Nanoteilchen bestehen vorzugsweise aus einer Ni-, Co- oder NiCo-Basislegierung, welche bevorzugt zusätzlich mindestens ein Metall aufweist aus der Gruppe von Ti, Cr, Nb, Hf, Ta, Mo, W, Al, Fe. Durch Verwendung dieser Materialien lassen sich grosse Risse bei relativ niedrigen Löttemperaturen reparieren, wobei als Vorteil hier ebenfalls beschrieben wird, dass der Gehalt an schmelztemperaturerniedrigenden Elementen abgesenkt werden kann und dadurch die mechanischen Eigenschaften der metallischen Komponente erhalten bleiben. Nachteilig an dieser technischen Lösung ist, dass aufgrund der alleinigen Verwendung von Nanopartikeln im Riss ein starker Schrumpfungsschwund nach dem Löten auftritt und somit die Qualität der Lötstelle verbesserungsbedürftig sein dürfte.

Schliesslich wird im Dokument EP 1 967 313 A1 ein Lot zum Reparieren von Turbinenbauteilen beschrieben, das ebenfalls zwei Pulverbestandteile aufweist, wobei der erste Bestandteil ein Pulver mit Korngrössen im Mikrometerbereich (0.7-100 µm) und der zweite Bestandteil ein Pulver mit Korngrössen im Nanometerbereich (kleiner gleich 500 nm) darstellt. Gemäss einer Ausführungsvariante weist der erste Bestandteil des Lotes, d.h. das Pulver mit einer Korngrösse im Mikrometerbereich, welches bevorzugt eine Legierung ist, einen Schmelzpunkterniedriger auf, und zwar insbesondere nur einen Schmelzpunkterniedriger aus der folgenden Gruppe: C, B, Hf, Si, Zr, Ti, Ta. Über den mengenmässigen Anteil des Schmelzpunkterniedrigers an der Zusammensetzung des ersten Pulvers werden im genannten Dokument keine Aussagen gemacht. Das Lot kann in Form einer Paste, eines Schlickers, in reiner Pulverform oder mittels einer Folie auf bzw. in die geschädigte Stelle gebracht werden. Der Unterschied in der Schmelztemperatur des Lotes zur Schmelztemperatur des Grundwerkstoffes soll möglichst gross sein, mindestens 70 °C.,

In WO2008/095531 A1 werden eine Lotzusammensetzung und ein Hartlötverfahren für Superlegierungen beschrieben. Die Lotzusammensetzung weist keine Schmelzpunkterniedriger auf, sondern besteht aus einem Grundwerkstoff, vorzugsweise Nickel (oder auch MCrAlX), und wenigstens einer Ausgangsphase, vorzugsweise Aluminium. Es wird nun eine zweifache Wärmebehandlung durchgeführt, wobei die erste Wärmebehandlung bei einer Temperatur durchgeführt wird, bei der die Ausgangsphase (kleinere Al-Partikel) schmilzt, der Grundwerkstoff (Ni) aber noch nicht. Die Ausgangsphase umgibt dann vollständig die grösseren Ni-Partikel. Die zweite Wärmebehandlung wird dann oberhalb einer Temperatur durchgeführt, bei der sich wenigstens eine resultierende Phase, hier Nickelaluminid, bildet, deren Solidustemperatur höher ist als die Solidustemperatur der Ausgangsphase. Wenn die resultierende Phase nach der zweiten Wärmebehandlung mechanische Eigenschaften aufweist, die den mechanischen Eigenschaften des Basismaterials nahe kommen, kann eine zuverlässige Fügung wie z. B. Verschliessen eines Risses, herbeigeführt werden. Hier können also nur eng begrenzte spezifische Lotzusammensetzungen, die zudem sehr vom Al-Gehalt abhängen, verwendet werden.

Bekannt sind auch kommerziell erhältliche sogenannte Nano-Folien mit einer Gesamtdicke von 40-150 µm, welche mittels Dampfabscheidung einer Vielzahl von separaten alternierenden Schichten von Al und Ni (jeweils im Nanometergrössenbereich) erzeugt werden. Eine derartige Nano-Folie wird zwischen zwei zu verbindende Bauteile angeordnet, wobei zwischen den Oberflächen der Nano-Folie und den Bauteiloberflächen jeweils eine Schicht Lotmaterial vorhanden ist, welche z. B. auf den Bauteiloberflächen appliziert sein kann. Es wird zunächst ein bestimmter Druck aufgebracht, um ein Verrutschen der Bauteile zu verhindern und dann wird durch einen geringen direkten lokalen Energieimpuls aus elektrischen, optischen oder thermischen Quellen eine chemische Reaktion zwischen den Al- und Ni-Schichten in der Nano-Folie gestartet (Aktivierung der Folie). Die Folie dient nun selbst als Wärmequelle, denn infolge der genannten chemischen Reaktion liefert die Folie innerhalb von Bruchteilen einer Sekunde lokalisiert eine Wärme bis zu Temperaturen von 1500 °C, was zum Aufschmelzen der benachbarten Lotschichten führt, so dass die zu verbindenden Bauteile nunmehr stoffschlüssig zusammengefügt sind. Temperaturempfindliche oder kleine Bauteile können auf diese Weise ohne thermische Beschädigungen miteinander verbunden werden, so dass die Folien vorwiegend im Bereich Mikroelektronik/Optoelektronik eingesetzt werden. Sie sind auch gut einsetzbar zum Verbinden von Metallen mit Keramik.

### Darstellung der Erfindung

Ziel der Erfindung ist es, die genannten Nachteile des Standes der Technik zu vermeiden. Der Erfindung liegt die Aufgabe zu Grunde, eine gegenüber einer aus dem Stand der Technik bekannten mittels Schmelzspinn-Verfahren hergestellten amorphen Lötfolie verbesserte Lötfolie zum Hochtemperaturlöten zu schaffen. Es ist auch eine Aufgabe der Erfindung, ein Verfahren zum Verbinden mindestens zweier Bauteilelemente aus einkristallinen oder gerichtet erstarrten Superlegierungen zwecks Herstellung bzw. Reparatur von Bauteilen, insbesondere Gasturbinenschaufeln, unter Verwendung der erfindungsgemässen Lötfolie anzugeben. Das stoffschlüssige metallische Fügen soll dabei bei niedrigeren Löttemperaturen stattfinden, eine Rekristallisation soll sicher unterbunden werden, die Fliessfähigkeit des Lotmaterials soll hoch sein und es sollen vor allem auch grosse Abstände zwischen den zu verlötenden Oberflächen gut überbrückbar sein.

Erfindungsgemäss wird dies bei einer amorphen, mittels bekanntem Schmelzspinn-Verfahren hergestellten Lötfolie auf Ni-, Co- oder Ni-Co-Basis zum Hochtemperaturlöten dadurch erreicht, dass die Oberseite und die Unterseite der Lötfolie mit einem Film aus metallischem Lotpulver auf Ni-Basis, Co-Basis oder Ni-Co-Basis mit einer Partikelgrösse im Nanometerbereich dünn beschichtet sind, wobei sowohl die mittels Schmelzspinn-Verfahren hergestellte Lötfolie als auch das Lotpulver zusätzlich korngrenzenstabilisierende Elemente, vorzugsweise B, C, Hf, Re, Zr, als Legierungselemente aufweisen, siehe Anspruch 1.

Mit der erfindungsgemässen Lötfolie wird vorteilhaft aufgrund der Nanometergrösse der Partikel an der Oberfläche die Schmelztemperatur des Lotmaterials stark herabgesetzt und dadurch gleichzeitig die Rekristallisationswahrscheinlichkeit im angrenzenden Grundmaterial reduziert, so dass es sich hervorragend zum Löten von einkristallinen bzw. gerichtet erstarrten Komponenten einsetzen lässt. Sollte sich doch einmal eine lokale Rekristallisation im Grundmaterial während des Lötens nicht vermeiden lassen, so findet aufgrund der vorhandenen korngrenzenstabilisierenden Elemente sehr effizient eine Verfestigung der Korngrenzen statt. Das Fliessverhalten des Lotmaterials ist sehr gut. Dadurch ist sichergestellt, dass beispielsweise unebene Fügespalte optimal mit dem Lot gefüllt werden.

Erfindungsgemäss wird die Aufgabe der Erfindung bei einem Verfahren zum Herstellen oder zur Reparatur eines Bauteiles, insbesondere Gasturbinenschaufel, welche aus mindestens zwei Bauteilelementen aus einkristallinen oder gerichtet erstarrten Superlegierungen auf Nickel-, Kobalt- oder Nickel-Kobalt-Basis besteht, und die Bauteilelemente einander gegenüberliegende zu verbindende Oberflächen aufweisen, dadurch erreicht, dass eine erfindungsgemässe Lötfolie (ohne Füllerpartikel auf der Oberfläche) verwendet wird, welche nach einer üblichen vorgängigen mechanischen Vorbereitung der zu verbindenden Oberflächen auf mindestens eine der Oberflächen aufgebracht wird, anschliessend die zu verbindenden Oberflächen der Bauteilelemente unter Ausbildung einer Fügestelle passgenau aufeinandergefügt und auf Kapillarspaltbreite zusammengepresst werden, und dann das Lot mittels einer einfachen, d.h. ohne zwischenzeitliche Abkühlung auf Raumtemperatur (RT), Wärmebehandlung aufgeschmolzen und auf RT abgekühlt wird, so dass eine stoffschlüssige Verbindung des Lotmaterials mit den Oberflächen der Bauteilelemente erzeugt wird, wobei das erstarrte Lotmaterial in der Fügestelle dieselbe einkristalline bzw. gerichtete Mikrostruktur wie das umgebende Grundmaterial aufweist, siehe Ansprüche 12-13.

Ebenso lässt sich ein Ersatzstück aus einkristalliner oder gerichtet erstarrter Superlegierung in ein beschädigtes Bauteil aus einkristalliner oder gerichtet erstarrter Superlegierung fügen.

Von Vorteil ist einerseits der einfache Lötprozess (Wärmebehandlung ohne Zwischenabkühlung(en) auf Raumtemperatur), andererseits die relativ niedrige Löttemperatur aufgrund der niedrigen Schmelztemperatur des Nano-Lotpulver bzw. der Lötfolie. Es gibt nur ein geringes Rekristallisationsrisiko.

Mit der erfindungsgemässen Lötfolie können auch qualitativ hochwertige stoffschlüssige Verbindungen von einkristallinen bzw. gerichtet erstarrten Artikeln/Komponenten realisiert werden, deren zu verbindende Oberflächen relativ grosse Abstände voneinander haben. Dies wird vor allem dann erreicht, wenn in der Beschichtung der Lötfolie zusätzlich Füllerpartikel enthalten sind, d.h. wenn ein Pulvergemisch aus Nano-Teilchen und Füllerpartikeln auf der Oberfläche der Folie vorhanden ist.

Mehrfache Lötanwendungen mit entsprechenden mehrfachen Wärmebehandlungen sind in vorteilhafter Weise nicht notwendig. Mit der Erfindung ist es möglich, Reparaturen von Schaufeln thermischer Turbomaschinen auf höher beanspruchte Gebiete auszudehnen mit einem minimalen Rekristallisationsrisiko.

Auch hier ist es von besonderem Interesse, dass einerseits nur ein einfacher Lötprozess nötig ist, und andererseits die Löttemperatur aufgrund der niedrigen Schmelztemperatur des Lotmaterials relativ niedrig ist. Es gibt nur ein geringes Rekristallisationsrisiko.

Bei Verwendung von grossen Füllerpartikeln und/oder höheren Anteilen der Füllerpartikeln in der Lotbeschichtung sind auch grössere Abstände zwischen den Bauteilelementen problemlos zu löten, allerdings dann ohne Ausbildung einer epitaktischen Mikrostruktur.

Es ist weiterhin von Vorteil, wenn die Lötfolie und/oder das Nano-Lotpulver mindestens ein schmelzpunkterniedrigendes Element aufweist mit einem Gehalt, welcher mindestens so hoch ist wie in üblichen kommerziell verfügbaren Lotzusammensetzungen.

Ein erhöhter Gehalt an Schmelzpunkterniedrigern (bis etwa doppelt so hoch wie in üblichen kommerziell verfügbaren Lotzusammensetzungen, beispielsweise ca. 3 bis 7 Gew.- % B, bis zu 15 Gew.- % Si, bis zu 15 Gew.-% P) ist dabei von besonderem Vorteil, weil sich dann die bekannte Wirkung der geringeren Korngrösse der Pulverteilchen auf die Absenkung der Schmelztemperatur und die Wirkung der Schmelzpunkterniedriger verstärken.

In einer Ausführungsvariante kann die Lötfolie auf ihrer Oberfläche zusätzlich Füllerpartikel enthalten mit einer Korngrösse im Bereich von 1-30 µm und einem Anteil an der gesamten Pulvermischung von 1 bis 40 Gew.- %. Vorzugsweise liegt die Korngrösse der Füllerpartikel im Bereich von 1 bis 15 µm und der Anteil der Füllerpartikel an der Gesamtmischung beträgt 5 bis 20 Gew.- %. Dann können besonders vorteilhaft breitere Spalte gelötet und somit grösserer Abstände zwischen den zu verbindenden Teilen überbrückt werden. Ausserdem ist es je nach Art und Anteil des eingesetzten Füllermaterials möglich, die Eigenschaften des gelöteten Bereiches zu beeinflussen. Allerdings weist dann das erstarrte Lotmaterial nicht zwingend dieselbe einkristalline bzw. gerichtet erstarrte Mikrostruktur auf wie das umgebende Grundmaterial.

In einer Ausführungsform können auch die Füllerpartikel an ihrer Oberfläche mit Partikeln des Lotpulvers dünn beschichtet sein. Die Beschichtung der

Ober- und Unterseite der Lötfolie und die Beschichtung der Füllerpartikel mit den Partikeln des Lotpulvers ist besonders vorteilhaft, wenn die Beschichtung nur eine Lage bis max. 10 Lagen der Partikel des Lotpulvers umfasst.

### Kurze Beschreibung der Zeichnungen

In der Zeichnung ist ein Ausführungsbeispiel der Erfindung dargestellt. Es zeigen schematisch:
- Fig. 1: ein geschädigtes Gebiet einer Turbinenschaufel nach Reparatur gemäss dem Stand der Technik;
- Fig. 2: ein geschädigtes Gebiet einer Turbinenschaufel nach Reparatur gemäss vorliegender Erfindung;
- Fig. 3: eine erfindungsgemässe Lötfolie in einer ersten Ausführungsvariante;
- Fig. 4: eine erfindungsgemässe Lötfolie in einer zweiten Ausführungsvariante
- Fig.5: eine modular gebaute Turbinenschaufel gemäss Erfindung und
- Fig. 6: eine Turbinenschaufel mit einem erfindungsgemäss gelöteten Einsatzstück.

### Wege zur Ausführung der Erfindung

Nachfolgend wird die Erfindung anhand von Ausführungsbeispielen und der Zeichnungen näher erläutert.

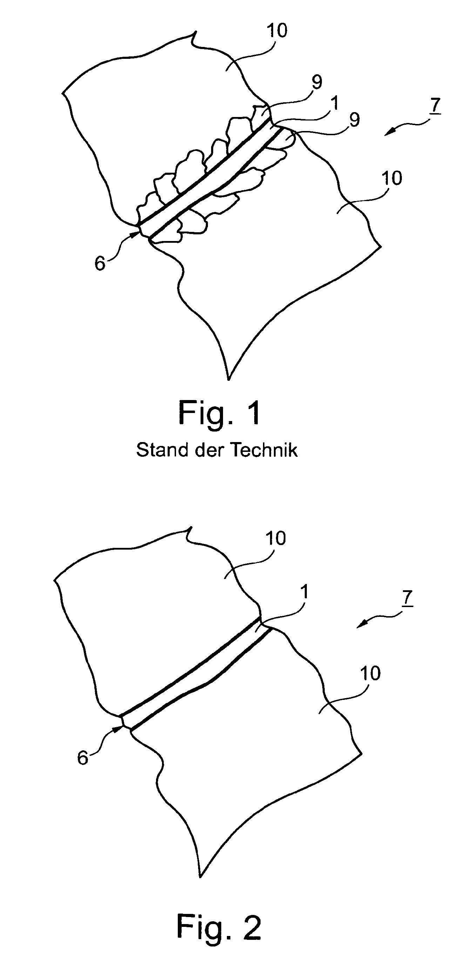

Fig. 1 zeigt schematisch eine Fügestelle 6 zur Reparatur eines geschädigten Bauteiles 7 nach einem herkömmlichen Reparatur-Lötverfahren gemäss Stand der Technik. Das Bauteil 7 ist im vorliegenden Falle eine Gasturbinenschaufel aus einem einkristallinen Grundmaterial 10, und zwar CMSX4 (10 Gew.- % Co, 6.5 Gew.- % Cr, 6.5 Gew.- % Ta, 6 Gew.- % W, 5.6 Gew.- % Al, 2.9 Gew.- % Re, 1 Gew.- % Ti, 0.6 Gew.- % Mo, 0.1 Gew.- % Hf, Rest Ni. Die Fügestelle 6 wurde mit einer herkömmlichen Lötfolie 1, welche mit Hilfe eines üblichen aus dem Stand der Technik bekannten Schmelzspinn-Verfahren hergestellt wurde, repariert. Die chemische Zusammensetzung des Lotmaterials war folgende: 15 Gew.- % Cr, 7.25 Gew.- % Si, 1.4 Gew.- % B, ≤ 0.06 Gew.- % C, Rest Ni. Deutlich zu erkennen ist das Rekristallisationsgebiet 9 um den Fügespalt 6 herum, dort liegt kein einkristallines Gefüge mehr im Grundmaterial 10 vor, d.h. hier weichen die Eigenschaften des Grundmaterials 10 deutlich von den hohen Anforderungen ab.

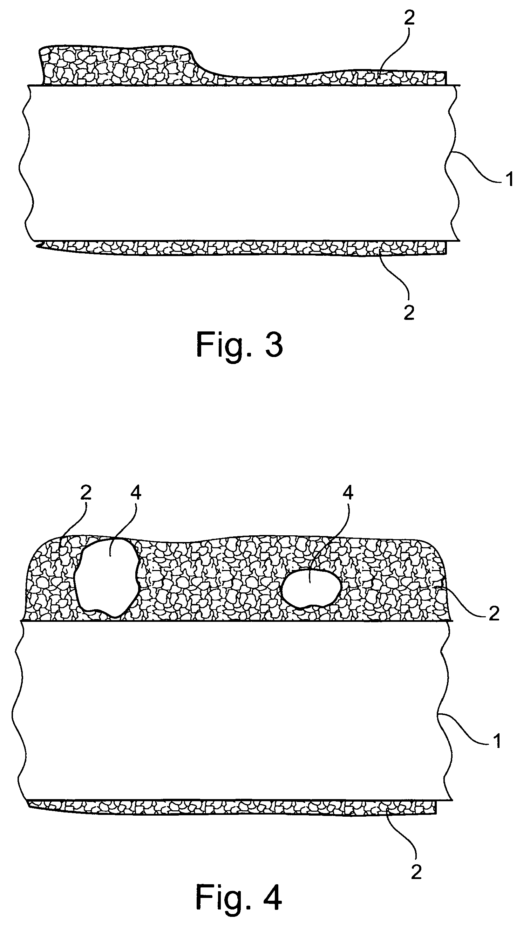

Fig. 2 zeigt schematisch die Fügestelle 6 des Bauteiles 7 nach dem erfindungsgemässen Reparatur-Lötverfahren mit der erfindungsgemässen Lötfolie. Deutlich ist im Vergleich zu Fig. 1 zu sehen, dass das rekristallisierte Gebiet um die Fügestelle 6 herum im Grundmaterial 10 fehlt, d.h. das Grundmaterial 10 ist auch nach der Reparatur, also nach dem Verlöten der Fügestelle 6, einkristallin. Weshalb das so ist wird im Zusammenhang mit Fig. 3 erklärt.

In Fig. 3 ist schematisch die erfindungsgemässe Lötfolie 1 in einer ersten Ausführungsvariante dargestellt. Die Lötfolie 1 wurde zunächst ebenfalls nach dem Schmelzspinn-Verfahren hergestellt, hat eine chemische Zusammensetzung auf Ni-Basis, auf Co-Basis oder Ni-Co-Basis und ist zum Hochtemperaturlöten geeignet. Die erfindungsgemässe Lötfolie 1 zeichnet sich dadurch aus, dass die Oberseite und die Unterseite der Lötfolie 1 mit einem Film aus metallischem Lotpulver 2 auf Ni-Basis, Co-Basis oder Ni-Co-Basis mit einer Partikelgrösse im Nanometerbereich dünn beschichtet sind, und dass sowohl die (ursprüngliche) Lötfolie 1 als auch das Lotpulver 2 zusätzlich korngrenzenstabilisierende Elemente, beispielsweise B, C, Hf, Re, Zr als Legierungselemente aufweisen. Im Sinne der vorliegenden Erfindung ist hier metallisch mit Legierung (Ni-Basis, Co-Basis bzw. Ni-Co-Basis) gleichzusetzen. Die Beschichtung der Lötfolie kann in Form von Pulver, als Paste oder als Suspension aufgetragen werden.

Konkret hatte in diesem Ausführungsbeispiel die mittels Schmelzspinn-verfahren hergestellte Lötfolie 1 folgende Material-Zusammensetzung: 15.2 Gew.- % Cr, 4 Gew.- % B, 0.06 Gew.- % C, Rest Ni.

Das metallische Lotpulver 2 wies folgende Zusammensetzung auf: 15 Gew.-% Cr, 10 Gew.- % Co, 5.5 Gew.- %Al, 3 Gew.- %Ta, 3 Gew.- % B, 0.15 Gew.- % Y, Rest Ni. Das Pulver 2 hatte einen Korngrössenbereich von 20-50 nm und wurde in ca. 5 Lagen auf die Oberseite und Unterseite der Folie als dünner Film aufgebracht, wie in Fig. 3 links oben angedeutet ist.

Mit der erfindungsgemässen Lötfolie 1 wird nun vorteilhaft aufgrund der Nanometergrösse der Partikel an der Oberfläche die Schmelztemperatur stark herabgesetzt und dadurch gleichzeitig die Rekristallisationswahrscheinlichkeit reduziert, so dass sie sich hervorragend zum Löten von einkristallinen bzw. gerichtet erstarrten Komponenten einsetzen lässt. Sollte sich doch einmal eine lokale Rekristallisation im Grundmaterial 10 während des Lötens nicht vermeiden lassen, so findet aufgrund der vorhandenen korngrenzenstabilisierenden Elemente sehr effizient eine Verfestigung der Korngrenzen statt. Das Fliessverhalten der erfindungsgemässen Lötfolie 1 ist sehr gut, dadurch werden auch unebene Fügespalte 6, wie beispielsweise in Fig. 1 dargestellt, optimal mit dem Lot gefüllt.

Selbstverständlich ist die erfindungsgemässe Lötfolie 1 auch zum Hochtemperaturlöten von konventionell gegossenen Komponenten einsetzbar.

Zusätzlich kann mindestens ein schmelzpunkterniedrigendes Element in der Lötfolie 1 und/oder im Nano-Pulver 2 als Legierungselement enthalten sein mit einem Gehalt, welcher mindestens so hoch ist wie in üblichen kommerziell verfügbaren Lotzusammensetzungen, vorzugsweise bis etwa doppelt so hoch. Beispielsweise kann der Anteil ca. 3 bis 7 Gew.- % B, bis zu 15 Gew.-% Si, bis zu 15 Gew.- % P betragen.

Dann verstärken sich vorteilhaft die Wirkung der geringeren Korngrösse der Pulverteilchen 2 auf die Absenkung der Schmelztemperatur und die Wirkung der Schmelzpunkterniedriger.

In Fig. 4 ist schematisch die erfindungsgemässe Lötfolie 1 in einer weiteren Ausführungsvariante dargestellt. Im Vergleich zu der in Fig. 3 dargestellten Variante sind hier zusätzlich Füllerpartikel 4, welche aus dem Grundmaterial 10 bzw. aus Derivaten des Grundmaterials bestehen, in der Beschichtung der Lötfolie 1 enthalten, d.h. das Nanopulver 2 ist mit den Füllerpartikeln 4 vermischt. Die Füllerpartikel 4 haben vorzugsweise eine Korngrösse im Bereich von 1-30 µm und einen Anteil an der gesamten Pulvermischung von 1 bis 40 Gew.- %. Vorteilhaft liegt die Korngrösse der Füllerpartikel 4 im Bereich von 1 bis 15 µm und der Anteil der Füllerpartikel 4 an der Pulvermischung beträgt 5 bis 20 Gew.- %. Damit können besonders breitere Fügespalte 6 gelötet werden und ausserdem ist es je nach Art und Anteil des eingesetzten Füllermaterials möglich, die Eigenschaften des gelöteten Bereiches zu beeinflussen. Allerdings ist dann aufgrund der vorhandenen grossen Füllerpartikel 4 damit zu rechnen, dass das Lotmaterial nicht mehr einkristallin bzw. gerichtet erstarrt wie das umgebende Grundmaterial.

Die Füllerpartikel 4 können auch zusätzlich auf ihrer Oberfläche mit Partikeln des Nano-Pulvers 2 dünn beschichtet sein (siehe Fig. 4, links oben). Die Beschichtung der Ober- und Unterseite der Folie 1 bzw. die Beschichtung der Füllerpartikel 4 mit den Partikeln des ersten Pulverbestandteils 2 sind besonders vorteilhaft, wenn sie nur eine Lage bis max. 10 Lagen der Partikel umfasst, weil diese dann sehr leicht anschmelzen.

Wenn beispielsweise in einem bevorzugten Ausführungsbeispiel eine Gasturbinenschaufel (Bauteil 7) aus einer einkristallinen Ni-Basis-Superlegierung infolge eines während des Betriebes entstandenen Schadens repariert werden muss, so wird zur Reparatur des geschädigten Bauteiles 7 die erfindungsgemässe Lötfolie 1 (ohne Füllerpartikel 4) verwendet. Die Lötfolie 1 wird nach einer vorgängigen üblichen Reinigung der Fügestelle 6 auf diese aufgebracht, dann wird sie mittels einer einfachen Wärmebehandlung (d.h. ohne Zwischenabkühlungen auf RT), die in mehreren Stufen verläuft, aufgeschmolzen und schliesslich auf RT abgekühlt, so dass eine stoffschlüssige Verbindung des Lotmateriales mit dem umgebenden Grundmaterial 10 des Bauteiles 7 erzeugt wird, wobei das erstarrte Lotmaterial dieselbe einkristalline bzw. gerichtete Mikrostruktur wie das umgebende Grundmaterial 10 aufweist. Die hierbei verwendete Wärmebehandlung (im Vakuumofen) sei beispielhaft für die der Erfindung zugrunde liegende Idee genannt: Die Heizrate betrug 10-15 °C / min, bei 400 °C wurde die Temperatur für 30 min konstant gehalten, um die flüchtigen Bestandteile der Lotpaste auf der Oberfläche der Lötfolie (1) auszubrennen. Um eine gleichmässige Temperaturverteilung im Ofen sicherzustellen wurde bei 930 °C die Temperatur für 30 min konstant gehalten. Der eigentliche Lötvorgang wurde bei 1050 °C während 20 min ausgeführt. Anschliessend wurde die Temperatur langsam (1-3 °C / min) auf 1000°C gesenkt und für 10 Stunden konstant gehalten um eine gerichtete bzw. einkristalline Erstarrung zu ermöglichen. Die anschliessende Abkühlung auf Raumtemperatur erfolgte rasch (ca. 30 °C / min).

Von Vorteil sind einerseits der einfache Lötprozess, andererseits die relativ niedrige Löttemperatur aufgrund der niedrigen Schmelztemperatur des Lotmaterials. Es gibt nur ein geringes Rekristallisationsrisiko im Grundmaterial 10, sowie eine Stabilisierung allfälliger Korngrenzen, falls sich doch Korngrenzen bilden sollten.

Werden breite Spalte (z. B. 250 µm Spaltbreite) gelötet, so gibt es kaum Schrumpfung, wenn Füllerpartikel 4 in der Beschichtung der Lötfolie 1 vorhanden sind. Allerdings weist dann das erstarrte Lotmaterial nicht zwingend dieselbe einkristalline bzw. gerichtet erstarrte Mikrostruktur wie das umgebende Grundmaterial auf, sondern es wird vorzugsweise polykristallin erstarren.

Mehrfache Lötanwendungen mit entsprechenden mehrfachen Wärmebehandlungen sind mit dem erfindungsgemässen Verfahren vorteilhaft nicht notwendig.

Mit der Erfindung ist es möglich, Reparaturen von Schaufeln thermischer Turbomaschinen auf höher beanspruchte Gebiete auszudehnen mit einem minimalen Rekristallisationsrisiko bzw. mit Stabilisierung allfällig auftretender Korngrenzen.

Durch die Anwesenheit des Lötpulvers 2 im Nanometerkorngrössenbereich auf der Ober- und Unterseite der Lötfolie 1 und die Schmelzpunkterniedriger wird eine metallische Bindung bei niedrigeren Temperaturen erreicht. Die Diffusion der Schmelzpunkterniedriger von den metallischen Lotpulverpartikeln hält während des Services der Gasturbine an. Da sich die Gebiete mit der beginnenden Rekristallistation an der Oberfläche des Bauteils befinden und von nur kleinen Ausmassen sind, reicht der geringe Diffusionsweg der korngrenzenstabilisierenden Elemente während des Lötzykluses aus, um die Korngrenzen lokal zu stabilisieren, selbst wenn die Diffusion von den grösseren Lotpartikeln noch nicht während der Wärmebehandlung beendet ist.

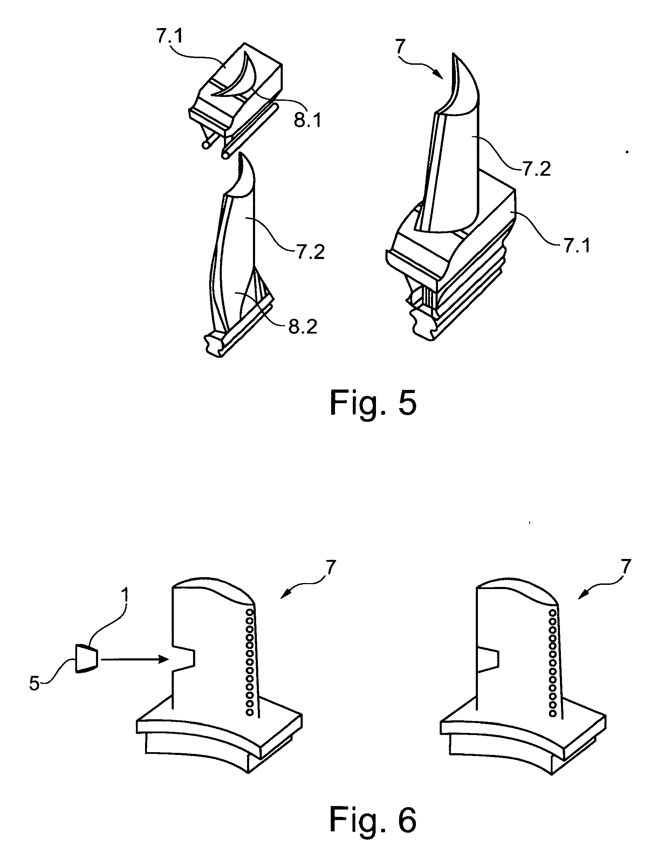

In Fig. 5 ist eine modular gebaute neue Turbinenschaufel gemäss Erfindung als weiteres Ausführungsbeispiel dargestellt. Die fertige Turbinenschaufel ist im rechten Teilbild von Fig. 5 zu sehen. Da es schwierig und teuer ist, grosse einkristalline Bauteile 7 herzustellen, werden auch neue Verfahren zum Herstellen modular gebauter Bauteile 7, insbesondere Gasturbinenschaufeln, welche aus mindestens zwei Bauteilelementen 7.1; 7.2 aus einkristallinen oder gerichtet erstarrten Superlegierungen auf Nickel-, Kobalt- oder Nickel-Kobalt-Basis bestehen, benötigt. Gemäss dem linken Teilbild von Fig. 5 stellt das Bauteil 7.1 den Schaufelfuss dar, in dem eine Öffnung zur Aufnahme des Bauteils 7.2 (= Schaufelblatt mit dem im Bauteil 7.1 fehlenden Fussabschnitt) angeordnet ist. Die Bauteilelemente 7.1; 7.2 weisen einander gegenüberliegende zu verbindende Oberflächen 8.1; 8.2 auf, die fehlerfrei stoffschlüssig miteinander verbunden werden sollen. Dabei wird eine erfindungsgemässe Lötfolie 1 ohne Füllerpartikel 4 verwendet, welche nach einer üblichen vorgängigen mechanischen Vorbereitung der zu verbindenden Oberflächen 8.1; 8.2 auf mindestens eine der Oberflächen 8.1; 8.2 aufgebracht wird. Das Bauteilelement 7.1 wird anschliessend passgenau auf das Bauteilelement 7.2 geschoben und gegebenenfalls werden beide Bauteilelemente 7.1; 7.2 aneinandergepresst, so dass nur noch eine max. Kapillarspaltbreite von ca. 120 µm vorhanden ist. Dann wird eine einfache Wärmebehandlung durchgeführt, bei der das Lotmaterial aufgeschmolzen und abschliessend auf RT abgekühlt wird, so dass eine stoffschlüssige Verbindung des Lotmaterials mit den Oberflächen 8.1; 8.2 der Bauteilelemente 7.1; 7.2 erzeugt wird, wobei das erstarrte Lotmaterial dieselbe einkristalline bzw. gerichtete Mikrostruktur wie das umgebende Grundmaterial 10 aufweist.

Ebenso lässt sich ein Ersatzstück 5 aus einkristalliner oder gerichtet erstarrter Superlegierung in ein beschädigtes Bauteil 7 aus einkristalliner oder gerichtet erstarrter Superlegierung epitaktisch fügen (siehe Fig. 6). Nach dem Heraustrennen des geschädigten Materials aus dem Bauteil 7 und einer üblichen vorgängigen mechanischen Vorbereitung der zu verbindenden Oberflächen des Bauteils 7 und des Ersatzstücks 5 wird eine erfindungsgemässe Lötfolie 1 ohne Füllerpartikel 4 auf mindestens eine der zu verbindenden Oberflächen aufgebracht. Im vorliegenden Ausführungsbeispiel sind das die Oberflächen des Ersatzstückes 5. Das Ersatzstück 5 wird dann mit der aufgebrachten Lötfolie 1 in das Bauteil 7, hier eine Gasturbinenschaufel, an der Stelle, an der vorgängig das geschädigte Material entfernt wurde, eingesetzt (siehe Pfeil im linken Teilbild von Fig. 6) und gegebenenfalls aneinandergepresst, so dass nur noch eine max. Kapillarspaltbreite von ca. 120 µm vorhanden ist. Mittels einer einfachen mehrstufigen Wärmebehandlung (ohne Zwischenabkühlungen auf RT) wird dann das Lotmaterial aufgeschmolzen. Bei der anschliessenden Abkühlung auf RT entsteht eine stoffschlüssige Verbindung des Lotmaterials mit den Oberflächen des Bauteils 7 und des Ersatzstücks 5, wobei das erstarrte Lotmaterial dieselbe einkristalline bzw. gerichtete Mikrostruktur wie das umgebende Grundmaterial 10 aufweist. Das reparierte Bauteil 7 ist im rechten Teilbild der Fig. 6 abgebildet.

Auch hier ist es von besonderem Vorteil, dass einerseits nur ein einfacher Lötprozess nötig ist, und dass andererseits die Löttemperatur aufgrund der niedrigen Schmelztemperatur der Lötfolie relativ niedrig ist. Es gibt nur ein geringes Rekristallisationsrisiko.

Bei zusätzlicher Verwendung von grossen Füllerpartikeln in der Beschichtung der Lötfolie und/oder bei Verwendung eines hohen Anteils an Füllerpartikeln sind auch grosse Abstände (bis zu 500 µm) zwischen den Bauteilelementen problemlos zu löten, allerdings sind dann (bei Abständen oberhalb der Kapillarrissbreite) keine epitaktischen Mikrostrukturen zu erwarten. Es wird ein homogenes Füllen der Lücken zwischen den zu verlötenden Oberflächen mit der Lötfolie erreicht bei gleichzeitig niedriger Löttemperatur, was eine feste metallurgische Verbindung der zu verbindenden Segmente ermöglicht.

### Bezugszeichenliste

- 1: Lötfolie
- 2: metallisches Lotpulver (mit Körngrössen im Nanometerbereich)
- 4: Füllerpartikel
- 5: Ersatzstück
- 6: Fügespalt
- 7: Bauteil
- 7.1; 7.2: Bauteilelement
- 8.1; 8.2: gegenüberliegende zu verbindende Oberflächen
- 9: Rekristallisationsgebiet
- 10: Grundmaterial

## Patentansprüche

1. Amorphe mittels Schmelzspinn-Verfahren hergestellte Lötfolie (1) auf Ni-Basis, Co-Basis oder Ni-Co-Basis zum Hochtemperaturlöten, wobei die Lötfolie (1) eine Oberseite und eine Unterseite aufweist, **dadurch gekennzeichnet, dass** die Oberseite und die Unterseite der Lötfolie (1) mit einem Film aus metallischem Lotpulver (2) auf Ni-Basis, Co-Basis oder Ni-Co-Basis mit einer Partikelgrösse im Nanometerbereich dünn beschichtet sind, wobei sowohl die Lötfolie (1) als auch das Lotpulver (2) zusätzlich korngrenzenstabilisierende Elemente als Legierungselemente aufweisen.

2. Lötfolie (1) nach Anspruch 1, **gekennzeichnet dadurch, dass** als korngrenzenstabilisierendes Element mindestens eines aus der Gruppe B, C, Hf, Re, Zr gewählt ist.

3. Lötfolie (1) nach Anspruch 1 oder 2, **dadurch gekennzeichnet, dass** die Lötfolie (1) und/oder das Lotpulver (2) mindestens ein schmelzpunkterniedrigendes Element aufweist mit einem Gehalt, welcher mindestens so hoch ist wie in üblichen kommerziell verfügbaren Lotzusammensetzungen.

4. Lötfolie (1) nach Anspruch 3, **dadurch gekennzeichnet, dass** der Gehalt an schmelzpunkterniedrigenden Elementen bis etwa doppelt so hoch ist wie in üblichen kommerziell verfügbaren Lotzusammensetzungen.

5. Lötfolie (1) nach Anspruch 3 oder 4, **dadurch gekennzeichnet, dass** als schmelzpunkterniedrigendes Element mindestens eines aus der Gruppe B, Si, P oder Kombinationen davon gewählt ist.

6. Lötfolie (1) nach Anspruch 5, **dadurch gekennzeichnet, dass** der Anteil an Bor ca. 3 bis 7 Gew.- % beträgt, an Si bis zu 15 Gew.- % beträgt und an P bis zu 15 Gew.- % beträgt.

7. Lötfolie (1) nach einem der Ansprüche 1 bis 6, **dadurch gekennzeichnet, dass** die Beschichtung der Lötfolie (1) zusätzlich Füllerpartikel (4) mit einer Korngrösse im Bereich von 1-30 µm und einem Anteil an der Pulvermischung von 1 bis 40 Gew.- % aufweist.

8. Lötfolie (1) nach Anspruch 7, **dadurch gekennzeichnet, dass** die Korngrösse der Füllerpartikel (4) 1 bis 15 µm beträgt.

9. Lötfolie (1) nach Anspruch 7, **dadurch gekennzeichnet, dass** der Anteil der Füllerpartikel (4) an der Pulvermischung 5 bis 20 Gew.- % beträgt.

10. Lötfolie (1) nach Anspruch 7, **dadurch gekennzeichnet, dass** die Füllerpartikel (4) an ihrer Oberfläche mit Partikeln des Lotpulvers (2) dünn beschichtet sind.

11. Lötfolie (1) nach Anspruch 1 oder 10, **dadurch gekennzeichnet, dass** die Beschichtung der Ober- und Unterseite der Lötfolie (1) und die Beschichtung der Füllerpartikel (4) mit den Partikeln des Lotpulvers (2) nur eine Lage bis max. 10 Lagen der Partikel des Lotpulvers (2) umfasst.

12. Verfahren zum Herstellen oder zur Reparatur eines Bauteiles (7), insbesondere Gasturbinenschaufel, welche aus mindestens zwei Bauteilelementen (7.1; 7.2) aus einkristallinen oder gerichtet erstarrten Superlegierungen auf Nickel-, Kobalt- oder Nickel-Kobalt-Basis als Grundmaterial (10) besteht, wobei die Bauteilelemente (7.1; 7.2) einander gegenüberliegende zu verbindende Oberflächen (8.1; 8.2) aufweisen, unter Verwendung einer Lötfolie (1) nach einem der Ansprüche 1-6, wobei nach einer üblichen vorgängigen mechanischen Vorbereitung der zu verbindenden Oberflächen (8.1; 8.2) die beschichtete Lötfolie (1) auf mindestens eine der Oberflächen (8.1; 8.2) aufgebracht wird, anschliessend die Oberflächen (8.1; 8.2) der Bauteilelemente (7.1; 7.2) unter Ausbildung einer Fügestelle (6) passgenau aufeinandergefügt und zusammengepresst werden, und dann mittels einer einfachen Wärmebehandlung das Lotmaterial aufgeschmolzen und auf Raumtemperatur abgekühlt wird, so dass eine stoffschlüssige Verbindung des Lotmaterials mit den Oberflächen (8.1; 8.2) der Bauteilelemente (7.1; 7.2) erzeugt wird, wobei das erstarrte Lotmaterial in der Fügestelle (6) dieselbe einkristalline bzw. gerichtet erstarrte Mikrostruktur wie das umgebende Grundmaterial (10) aufweist.

13. Verfahren zur Reparatur eines Bauteils (7), insbesondere Gasturbinenschaufel, welches aus einer einkristallinen oder gerichtet erstarrten Superlegierung auf Nickel-, Kobalt- oder Nickel-Kobalt-Basis als Grundmaterial (10) besteht, durch Einfügen eines Ersatzstückes (5) in das zu reparierende Bauteil (7), wobei das Ersatzstück (5) aus einer einkristallinen oder gerichtet erstarrten Superlegierung auf Nickel-, Kobalt- oder Nickel-Kobalt-Basis als Grundmaterial (10) besteht, unter Verwendung einer Lötfolie (1) nach einem der Ansprüche 1-6, wobei nach einer üblichen vorgängigen mechanischen Vorbereitung der zu verbindenden Oberflächen des Bauteils (7) und des Ersatzstückes (5) die beschichtete Lötfolie (1) auf mindestens eine der zu verbindenden Oberflächen aufgebracht wird, das Ersatzstück (5) unter Ausbildung einer Fügestelle (6) in das Bauteil (7) eingebracht und gegebenenfalls eingepresst wird, und danach das Lotmaterial mittels einer einfachen Wärmebehandlung aufgeschmolzen und auf Raumtemperatur abgekühlt wird, so dass eine stoffschlüssige Verbindung des Lotmaterials mit den Oberflächen der Bauteils (7) und des Ersatzstücks (5) erzeugt wird, wobei das erstarrte Lotmaterial in der Fügestelle (6) dieselbe einkristalline bzw. gerichtet erstarrte Mikrostruktur wie das umgebende Grundmaterial (10) aufweist.

## Claims

1. Amorphous Ni-based, Co-based or Ni-Co-based braze foil (1) for high-temperature brazing produced by means of a melt-spin process, wherein the braze foil (1) has an upper side and a lower side, **characterized in that** the upper side and the lower side of the braze foil (1) are thinly coated with a film of metallic Ni-based, Co-based or Ni-Co-based braze powder (2) with a particle size in the nanometer range, wherein both the braze foil (1) and also the braze powder (2) additionally comprise grain boundary stabilizing elements as alloying elements.

2. Braze foil (1) according to Claim 1, **characterized in that** at least one element from the group consisting of B, C, Hf, Re and Zr is selected as the grain boundary stabilizing element.

3. Braze foil (1) according to Claim 1 or 2, **characterized in that** the braze foil (1) and/or the braze powder (2) comprises at least one melting point depressant, in a content which is at least as high as in common, commercially available braze alloy compositions.

4. Braze foil (1) according to Claim 3, **characterized in that** the content of melting point depressants is up to about twice as high as in common, commercially available braze alloy compositions.

5. Braze foil (1) according to Claim 3 or 4, **characterized in that** at least one element from the group consisting of B, Si and P or combinations thereof is or are selected as the melting point depressant.

6. Braze foil (1) according to Claim 5, **characterized in that** the proportion of boron is about 3 to 7% by weight, the proportion of Si is up to 15% by weight and the proportion of P is up to 15% by weight.

7. Braze foil (1) according to one of Claims 1 to 6, **characterized in that** the coating of the braze foil (1) additionally comprises filler particles (4) having a grain size in the range of 1-30 µm and a proportion in the powder mixture of 1 to 40% by weight.

8. Braze foil (1) according to Claim 7, **characterized in that** the grain size of the filler particles (4) is 1 to 15 µm.

9. Braze foil (1) according to Claim 7, **characterized in that** the proportion of the filler particles (4) in the powder mixture is 5 to 20% by weight.

10. Braze foil (1) according to Claim 7, **characterized in that** the surface of the filler particles (4) is thinly coated with particles of the braze powder (2) .

11. Braze foil (1) according to Claim 1 or 10, **characterized in that** the coating of the upper and lower side of the braze foil (1) and the coating of the filler particles (4) with the particles of the braze powder (2) comprise only one layer up to max. 10 layers of the particles of the braze powder (2).

12. Method for producing or for repairing a component (7), in particular a gas turbine blade or vane, which consists of at least two component elements (7.1; 7.2) made of single crystal or directionally solidified nickel-based, cobalt-based or nickel - cobalt-based superalloys as base material (10), wherein the component elements (7.1; 7.2) have surfaces (8.1; 8.2) which lie face to face and are to be connected, using a braze foil (1) according to one of Claims 1-6, wherein, after conventional, preceding mechanical preparation of the surfaces (8.1; 8.2) to be connected, the coated braze foil (1) is applied to at least one of the surfaces (8.1; 8.2), then the surfaces (8.1; 8.2) of the component elements (7.1; 7.2) are joined to one another with an exact fit to form a joint (6) and pressed together, and then the braze material is melted by simple heat treatment and cooled to room temperature, such as to establish an integral bond between the braze material and the surfaces (8.1; 8.2) of the component elements (7.1; 7.2), wherein the solidified braze material in the joint (6) has the same single crystal or directionally solidified microstructure as the surrounding base material (10).

13. Method for repairing a component (7), in particular a gas turbine blade or vane, which consists of a single crystal or directionally solidified nickel-based, cobalt-based or nickel-cobalt-based superalloy as base material (10), by inserting a replacement piece (5) into the component (7) to be repaired, wherein the replacement piece (5) consists of a single crystal or directionally solidified nickel-based, cobalt-based or nickel-cobalt-based superalloy as base material (10), using a braze foil (1) according to one of Claims 1-6, wherein, after conventional, preceding mechanical preparation of the surfaces of the component (7) and of the replacement piece (5) which are to be connected, the coated braze foil (1) is applied to at least one of the surfaces to be connected, the replacement piece (5) is introduced into the component (7) to form a joint (6) and optionally pressed in, and then the braze material is melted by simple heat treatment and cooled to room temperature, such as to establish an integral bond between the braze material and the surfaces of the component (7) and of the replacement piece (5), wherein the solidified braze material in the joint (6) has the same single crystal or directionally solidified microstructure as the surrounding base material (10) .

## Revendications

1. Feuille de brasage amorphe (1) à base de Ni, à base de Co ou à base de Ni-Co pour le brasage à haute température fabriquée par un procédé de filage à chaud, la feuille de brasage (1) présentant une face supérieure et une face inférieure, **caractérisée en ce que** la face supérieure et la face inférieure de la feuille de brasage (1) sont finement revêtues d'un film de poudre de brasage métallique (2) à base de Ni, à base de Co ou à base de Ni-Co avec une taille de particules dans le domaine nanométrique, dans laquelle aussi bien la feuille de brasage (1) que la poudre de brasage (2) présentent en outre comme éléments d'alliage des éléments stabilisant les frontières de grains.

2. Feuille de brasage (1) selon la revendication 1, **caractérisée en ce qu'**au moins un des éléments du groupe B, C, Hf, Re, Zr est choisi comme élément stabilisant les frontières de grains.

3. Feuille de brasage (1) selon la revendication 1 ou 2, **caractérisée en ce que** la feuille de brasage (1) et/ou la poudre de brasage (2) présente au moins un élément abaissant le point de fusion en une teneur qui est au moins aussi élevée que dans les compositions de brasage usuelles disponibles dans le commerce.

4. Feuille de brasage (1) selon la revendication 3, **caractérisée en ce que** la teneur en éléments abaissant le point de fusion est jusqu'environ deux fois plus élevée que dans les compositions de brasage usuelles disponibles dans le commerce.

5. Feuille de brasage (1) selon la revendication 3 ou 4, **caractérisée en ce qu'**au moins un des éléments du groupe B, Si, P ou des combinaisons de ceux-ci est choisi comme élément abaissant le point de fusion.

6. Feuille de brasage (1) selon la revendication 5, **caractérisée en ce que** la teneur en bore vaut environ 3 à 7 % en poids, la teneur en Si vaut jusqu'à 15 % en poids, et la teneur en P vaut jusqu'à 15 % en poids.

7. Feuille de brasage (1) selon l'une quelconque des revendications 1 à 6, **caractérisée en ce que** le revêtement de la feuille de brasage (1) comporte en outre des particules de charge (4) avec une taille de grain de l'ordre de 1 - 30 µm et avec une proportion dans le mélange de poudre de 1 à 40 % en poids.

8. Feuille de brasage (1) selon la revendication 7, **caractérisée en ce que** la taille de grain des particules de charge (4) vaut 1 à 15 µm.

9. Feuille de brasage (1) selon la revendication 7, **caractérisée en ce que** la proportion des particules de charge (4) dans le mélange de poudre vaut 5 à 20 % en poids.

10. Feuille de brasage (1) selon la revendication 7, **caractérisée en ce que** les particules de charge (4) sont finement revêtues à leur surface avec des particules de la poudre de brasage (2).

11. Feuille de brasage (1) selon la revendication 1 ou 10, **caractérisée en ce que** le revêtement de la face supérieure et inférieure de la feuille de brasage (1) et le revêtement des particules de charge (4) avec les particules de la poudre de brasage (2) ne comprennent qu'une couche à 10 couches au maximum des particules de la poudre de brasage (2).

12. Procédé de production ou de réparation d'un composant (7), en particulier d'une aube de turbine à gaz, qui se compose d'au moins deux éléments de composant (7.1; 7.2) en superalliages monocristallins ou à solidification dirigée à base de nickel, de cobalt ou de nickel-cobalt comme matériau de base (10), dans lequel les éléments de composant (7.1; 7.2) présentent des surfaces à assembler opposées l'une à l'autre (8.1; 8.2), avec utilisation d'une feuille de brasage (1) selon l'une quelconque des revendications 1 à 6, dans lequel, après une préparation mécanique préalable usuelle des surfaces à assembler (8.1; 8.2), on applique la feuille de brasage revêtue (1) sur au moins une des surfaces (8.1; 8.2), on assemble ensuite en ajustement précis et on presse l'une contre l'autre les surfaces (8.1; 8.2) des éléments de composant (7.1; 7.2) en formant une zone de jonction (6) puis, au moyen d'un traitement thermique simple, on fond le matériau de brasage et on le refroidit à la température ambiante, de façon à produire une liaison matérielle du matériau de brasage avec les surfaces (8.1; 8.2) des éléments de composant (7.1; 7.2), le matériau de brasage solidifié dans la zone de jonction (6) présentant la même microstructure monocristalline ou à solidification dirigée que le matériau de base environnant (10).

13. Procédé pour la réparation d'un composant (7), en particulier d'une aube de turbine à gaz, qui se compose d'un superalliage monocristallin ou à solidification dirigée à base de nickel, de cobalt ou de nickel-cobalt comme matériau de base (10), par insertion d'une pièce de remplacement (5) dans le composant à réparer (7), dans lequel la pièce de remplacement (5) se compose d'un superalliage monocristallin ou à solidification dirigée à base de nickel, de cobalt ou de nickel-cobalt comme matériau de base (10), avec utilisation d'une feuille de brasage (1) selon l'une quelconque des revendications 1 à 6, dans lequel, après une préparation mécanique préalable usuelle des surfaces à assembler du composant (7) et de la pièce de remplacement (5), on applique la feuille de brasage revêtue (1) sur au moins une des surfaces à assembler, on introduit la pièce de remplacement (5) dans le composant (7) et on la presse éventuellement dans le composant en formant une zone de jonction (6) puis, au moyen d'un traitement thermique simple, on fond le matériau de brasage et on le refroidit à la température ambiante, de façon à produire une liaison matérielle du matériau de brasage avec les surfaces du composant (7) et de la pièce de remplacement (5), le matériau de brasage solidifié dans la zone de jonction (6) présentant la même microstructure monocristalline ou à solidification dirigée que le matériau de base environnant (10).
